# DEMANDE DE BREVET EUROPEEN

(11) **EP 1 207 259 A2**
(43) Date de publication de la demande: **22.05.2002**
(21) Numéro de dépôt: 01124766.5
(22) Date de dépôt: 17.10.2001
(51) Int. Cl.: E05D 15/40, E05D 15/16, B60J 5/10

(54) **Dispositif d'articulation d'un ouvrant de véhicule automobile, notamment d'un hayon arrière**

(30) Priorité: 20.11.2000 FR 0014926
(71) Demandeur: Peugeot Citroen Automobiles SA, 92200 Neuilly sur Seine (FR)
(72) Inventeur: Le Coquil, Serge, 91330 Yerres (FR)
(74) Mandataire: Poupon, Michel

(57) **Abrégé**

La présente invention concerne un dispositif d'articulation d'un véhicule automobile, notamment d'un hayon arrière (8), déplaçable entre une position d'ouverture et une position de fermeture, par pivotement de ce dernier par rapport à la structure (2) de la caisse du véhicule autour d'un axe horizontal (9), caractérisé en ce que cet axe de pivotement (9) est situé transversalement à l'intérieur du véhicule sensiblement dans la partie haute de ce dernier de manière à ce que, en position extrême d'ouverture l'ouvrant se retrouve par pivotement autour de cet unique axe (9) en majeure partie au dessus du toit du véhicule.

## Description

La présente invention concerne un dispositif d'articulation d'un ouvrant de véhicule automobile, notamment d'un hayon arrière, qui est monté pivotant sur la structure de la caisse du véhicule.

Elle se rapporte plus particulièrement à un dispositif formant ouvrant déplaçable entre une position d'ouverture et une position de fermeture par l'intermédiaire d'un mécanisme destiné à offrir un débattement de l'ouvrant dans un espace restreint tant en hauteur que sur l'arrière du véhicule.

On connaît déjà dans l'état de la technique antérieure, notamment par le document FR-A-2 764 245, un tel dispositif d'articulation d'un ouvrant monté pivotant sur un véhicule automobile par l'intermédiaire d'une bielle d'articulation, du type dans lequel sont prévus des moyens d'asservissement du mouvement de pivotement de l'ouvrant au mouvement de pivotement de la première extrémité de la bielle par rapport à la structure de la caisse du véhicule. Le sens de pivotement de l'ouvrant par rapport à la seconde extrémité de la bielle, s'inverse au cours du mouvement de pivotement de la première extrémité de la bielle entre deux positions angulaires extrêmes associées aux positions extrêmes fermée et ouverte de l'ouvrant.

Bien que de tels dispositifs d'articulations soient connus, ils continuent de faire l'objet de développements visant à améliorer le mécanisme d'articulation de l'ouvrant et à simplifier également sa fabrication.

Ainsi, l'invention a pour but de proposer un dispositif perfectionné d'articulation d'un ouvrant qui permet d'offrir un débattement restreint de l'ouvrant tant en hauteur que derrière le véhicule.

A cet effet, la présente invention a pour objet un dispositif d'articulation d'un véhicule automobile, notamment d'un hayon arrière, déplaçable entre une position d'ouverture et une position de fermeture, par pivotement de ce dernier par rapport à la structure de la caisse du véhicule autour d'un axe horizontal, caractérisé en ce que cet axe de pivotement est situé transversalement à l'intérieur du véhicule sensiblement dans la partie haute de ce dernier de manière à ce que, en position extrême d'ouverture, l'ouvrant se retrouve par pivotement autour de cet unique axe en majeure partie au dessus du toit du véhicule.

Selon une caractéristique avantageuse de la présente invention, le hayon comporte des moyens d'entraînement en rotation constitués de deux bielles parallèles, s'étendant parallèlement à l'axe longitudinal du véhicule dont l'une des extrémités de chacune des bielles est montée articulée sur la structure de la caisse autour dudit axe transversal tandis que l'extrémité opposée est reliée rigidement au hayon.

Selon une autre caractéristique avantageuse, ce hayon est, en outre, pourvu dans sa partie supérieure de moyens de guidage destinés à rigidifier le hayon lors de sa manoeuvre.

Ces moyens de guidage sont, avantageusement, constitués de deux rails circulaires agencés symétriquement par rapport au plan longitudinal médian de symétrie, disposés de chaque côté du hayon et dont le centre du rayon de courbure des rails est situé au niveau dudit axe d'articulation des bielles, à l'intérieur desquelles coulisse un galet, libre en rotation, solidaire de la structure de la caisse.

Selon une variante de réalisation, le hayon comporte des moyens d'entraînement en rotation constitués de deux glissières circulaires agencées symétriquement par rapport au plan longitudinal médian de symétrie, et dont le centre du rayon de courbure des glissières est situé au niveau dudit axe de pivotement.

Avantageusement, chacune des glissières est, par exemple, constituée d'une partie fixe et d'une partie mobile ; la partie fixe est disposée verticalement de chaque côté latéral de la structure, sensiblement dans la partie située au voisinage de la partie supérieure du hayon, à l'intérieur de laquelle coulisse la partie mobile agencée sur la paroi latérale du hayon.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue latérale de la partie arrière d'un véhicule automobile équipé du dispositif formant ouvrant conforme à l'invention, et qui est illustré, en traits pleins, en position extrême ouverte et, en silhouette, en position extrême fermée ;
- la figure 2 est une vue en coupe suivant la ligne II-II de la figure 1, à plus grande échelle du moyen de guidage de l'ouvrant ; et
- la figure 3 est une vue similaire à la figure 1 illustrant un second mode de réalisation.

Sur ces figures, des références numériques identiques désignent des organes ou ensembles d'organes identiques ou analogues.

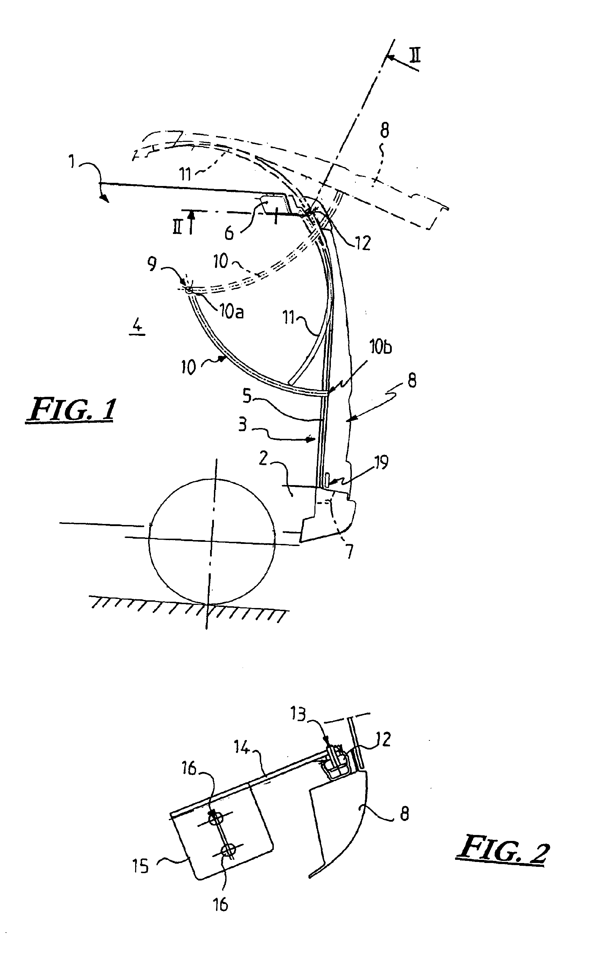

En se reportant à la figure 1, on peut voir la partie arrière 1 d'un véhicule automobile dont la caisse 2 est pourvue d'une ouverture 3 à l'arrière pour permettre l'accès au coffre 4 du véhicule.

Cette ouverture 3 est délimitée par un cadre s'étendant dans un plan sensiblement vertical, constitué par deux montants latéraux verticaux 5 dont l'un est visible sur la figure 1, agencés de manière symétrique par rapport au plan longitudinal médian du véhicule, et par deux traverses supérieure 6 et inférieure 7.

Cette ouverture 3 est de manière connue obstruée par un ouvrant 8, désigné généralement hayon arrière, globalement monté pivotant par rapport à la structure de la caisse 2 du véhicule autour d'un axe horizontal 9, désigné axe de pivotement.

Selon la présente invention, cet axe de pivotement 9 est situé transversalement à l'intérieur du véhicule sensiblement dans la partie haute de ce dernier de manière qu'en position extrême d'ouverture l'ouvrant se retrouve par pivotement autour de cet unique axe 9 en majeure partie au dessus du toit du véhicule.

A cet effet, le hayon 8 est monté pivotant sur la caisse 2 au moyen de deux bielles parallèles 10, s'étendant parallèlement à l'axe longitudinal du véhicule dont l'une 10a des extrémités de chacune des bielles 10 est montée articulée sur la structure de la caisse 2 autour de l'axe transversal 9 tandis que l'extrémité opposée 10b est reliée rigidement au hayon 8.

Ce hayon 8 est, en outre, pourvu dans sa partie supérieure de moyens de guidage 11 destinés à rigidifier le hayon 8 lors de sa manoeuvre.

Ces moyens de guidage 11 sont constitués de deux rails circulaires agencés symétriquement par rapport au plan longitudinal médian de symétrie, disposés de chaque côté du hayon 8 et dont le centre du rayon de courbure des rails 11 est situé au niveau de l'axe d'articulation 9 des bielles 10, à l'intérieur desquelles coulisse un galet 12 libre en rotation fixé sur la traverse supérieure 6 du cadre de l'ouverture 3.

En se reportant à la figure 2, on voit que le galet 12 est monté libre en rotation autour d'un axe transversal 13, parallèle à l'axe d'articulation 9, fixé à un moyen support 14, réglable longitudinalement par rapport à la traverse supérieure 6 de manière à pouvoir régler la pression du hayon 8 sur un joint d'étanchéité, non représenté, disposé en partie supérieure, en position fermée.

Ce moyen support 14 est constitué d'une plaque 15 sur laquelle est agencé au moins un trou oblong 16 destiné à être traversé par un moyen de fixation du type vis, non représenté, afin de solidariser cette plaque 15 à ladite traverse supérieure 6.

Le hayon 8 est pourvu dans sa partie inférieure, de manière classique, d'une serrure 19 verrouillant ce dernier sur la traverse inférieure 7.

Lors de l'ouverture du hayon 8, l'utilisateur déverrouille le hayon 8 de la caisse 2, puis le tire vers lui ; le hayon 8 s'élève alors autour de l'axe d'articulation 9 par l'intermédiaire des bielles 10, entraînant également le coulissement de chaque galet 12 dans chacun des rails 11 associés afin de guider la partie supérieure du hayon 8 et d'assurer une stabilité à ce dernier. L'ouvrant 8 se retrouve ainsi en position extrême d'ouverture, en majeure partie au-dessus du toit du véhicule dégageant ainsi l'ouverture d'accès au coffre 4 de celui-ci.

On comprend aisément qu'un tel mécanisme permet de situer l'axe de rotation 9 du hayon 8 à l'intérieur du véhicule offrant ainsi l'avantage par rapport à une solution classique connue d'autoriser une zone plus faible de dégagement de l'ouvrant. Cet axe d'articulation est avantageusement situé à l'intérieur du véhicule dans la partie haute, entre deux plans horizontaux parallèles dont l'un passe en position de fermeture, sensiblement à la moitié de la hauteur du hayon 8 tandis que l'autre passe sensiblement aux trois quart de la hauteur du hayon.

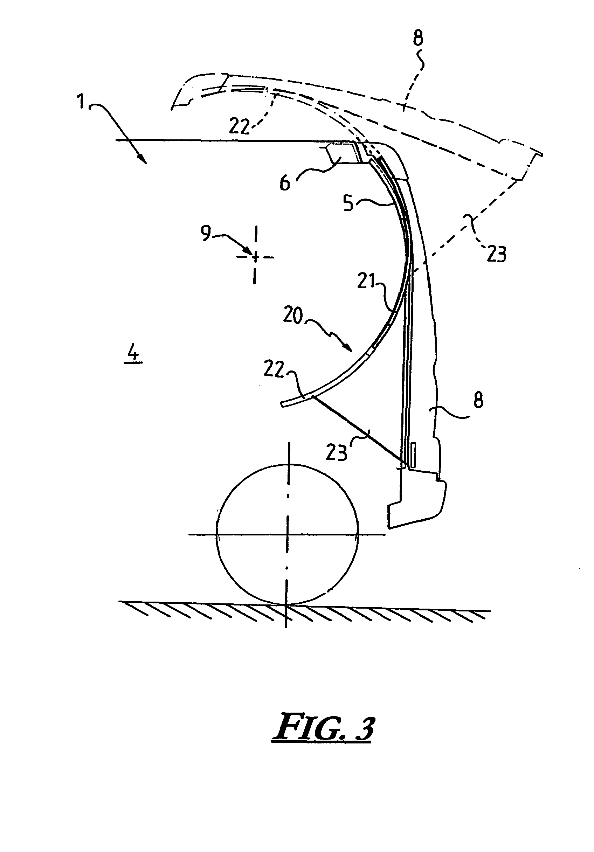

On a représenté à la figure 3, un second mode de réalisation du dispositif formant ouvrant 1.

Selon cette variante, les moyens d'entraînement 20 en rotation du hayon 8 sont constitués de deux glissières circulaires agencées symétriquement par rapport au plan longitudinal médian de symétrie, et dont le centre 19 du rayon de courbure des glissières est situé fictivement à l'intérieur du véhicule, sensiblement dans la partie haute du véhicule de manière à ce que, en position extrême d'ouverture, l'ouvrant se retrouve en majeure partie au dessus du toit du véhicule.

Chacune des glissières 20 est constituée d'une partie fixe 21 et d'une partie mobile 22 ; la partie fixe 21 est disposée de chaque côté du dormant 5 -ou montant latéral- d'encadrement de l'ouverture 3 du coffre 4, sensiblement dans la partie située au voisinage de la partie supérieure du hayon 8, à l'intérieur de laquelle coulisse la partie mobile 22 solidaire du hayon 8. Chacune des parties mobiles est agencée sur la paroi latérale 23 du hayon 8, comme visible sur la figure 3.

L'ouverture du hayon 8 s'effectue de la même manière que celle décrite ci-dessus. Les deux glissières 20 entraînent en élévation le hayon 8 jusqu'à ce que ce dernier se trouve en majeure partie au dessus du toit. Ce second mode de réalisation offre l'avantage par rapport au premier mode de réalisation décrit ci-dessus de ne pas utiliser de bielles 10 -ou moyens d'entraînement en rotation- qui nécessitent un volume de rangement de ceux-ci relativement important à l'intérieur du volume consacré au coffre 4.

On comprend à la lecture de la description ci-dessus que le dispositif formant ouvrant a pour avantage d'offrir un mécanisme simple à réaliser et à fabriquer afin d'obtenir un débattement de l'ouvrant dans un espace restreint tant en hauteur que derrière le véhicule.

Bien que l'invention ait été décrite en liaison avec deux modes de réalisation particuliers elle comprend tous les équivalents techniques des moyens décrits.

## Revendications

1. Dispositif d'articulation d'un véhicule automobile, notamment d'un hayon arrière (8), déplaçable entre une position d'ouverture et une position de fermeture, par pivotement de ce dernier par rapport à la structure (2) de la caisse du véhicule autour d'un axe horizontal (9), **caractérisé en ce que** cet axe de pivotement (9) est situé transversalement à l'intérieur du véhicule sensiblement dans la partie haute de ce dernier de manière à ce que, en position extrême d'ouverture, l'ouvrant se retrouve par pivotement autour de cet unique axe (9) en majeure partie au dessus du toit du véhicule.

2. Dispositif d'articulation selon la revendication 1, **caractérisé en ce que** le hayon (8) comporte des moyens d'entraînement en rotation constitués de deux bielles parallèles (10), s'étendant parallèlement à l'axe longitudinal du véhicule dont l'une (10a) des extrémités de chacune des bielles (10) est montée articulée sur la structure de la caisse (2) autour dudit axe transversal (9) tandis que l'extrémité opposée (10b) est reliée rigidement au hayon (8).

3. Dispositif d'articulation selon la revendication 2, **caractérisé en ce que** ce hayon (8) est, en outre, pourvu dans sa partie supérieure de moyens de guidage (11) destinés à rigidifier le hayon (8) lors de sa manoeuvre.

4. Dispositif d'articulation selon la revendication 3, **caractérisé en ce que** ces moyens de guidage (11) sont constitués de deux rails circulaires agencés symétriquement par rapport au plan longitudinal médian de symétrie, disposés de chaque côté du hayon (8) et dont le centre du rayon de courbure des rails (11) est situé au niveau dudit axe d'articulation (9) des bielles (10), à l'intérieur desquelles coulisse un galet (12), libre en rotation, solidaire de la structure (2) de la caisse.

5. Dispositif d'articulation selon la revendication 1, **caractérisé en ce que** le hayon (8) comporte des moyens d'entraînement en rotation constitués de deux glissières circulaires (20) agencées symétriquement par rapport au plan longitudinal médian de symétrie, et dont le centre (19) du rayon de courbure des glissières est situé au niveau dudit axe de pivotement (9).

6. Dispositif d'articulation selon la revendication 5, **caractérisé en ce que** chacune des glissières (20) est constituée d'une partie fixe (21) et d'une partie mobile (22) ; la partie fixe (21) étant disposée verticalement de chaque côté latéral de la structure (2), sensiblement dans la partie située au voisinage de la partie supérieure du hayon (8), à l'intérieur de laquelle coulisse la partie mobile (22) agencée sur la paroi latérale (23) du hayon (8).
